Europäisches Patentamt

European Patent Office

Office européen des brevets

Publication number: **0 272 768**

A2

# EUROPEAN PATENT APPLICATION

Application number: 87305759.0

Date of filing: 29.06.87

Int. Cl.4 **A23G 1/20** , A23G 3/20 , A23G 1/00 , A23G 3/00

Priority: 19.12.86 AU 66814/86

Date of publication of application:
29.06.88 Bulletin 88/26

Designated Contracting States:
AT BE CH DE ES FR GB GR IT LI LU NL SE

Applicant: **Green, Gary**
**Santa Laura 2/264 Marine Parade**
**Labrador Queensland 4215(AU)**

Inventor: **Green, Gary**
**Santa Laura 2/264 Marine Parade**
**Labrador Queensland 4215(AU)**

Representative: **Newstead, Michael John et al**
**Page & Co. Temple Gate House Temple Gate**
**Bristol BS1 6PL(GB)**

## Improved chocolate product and method of producing same.

A chocolate product has a design of a different coloured chocolate or chocolate-like material than the rest of the chocolate product. A method of forming such a chocolate product, having a raised design of a different colour than the rest of the chocolate product, comprises the steps of: introducing into a mould, having impressions thereof of the mirror image of the raised design, sufficient chocolate or chocolate-like material, or chocolate substitute, of a first colour to fill the impressions; removing any excess material of the first colour from the mould; introducing into the mould chocolate or chocolate material of a second colour; cooling the chocolate in the mould so as to set the chocolate to meld the two coloured chocolate materials; and removing the thus formed chocolate product from the mould.

EP 0 272 768 A2

Xerox Copy Centre

## IMPROVED CHOCOLATE PRODUCT AND METHOD OF PRODUCING SAME

The present invention relates to an improved chocolate product and a method of producing same, and in particular, to a chocolate product having letters or designs formed thereon of a different coloured chocolate or chocolate-like material.

It is known in the confectionery trade to pipe designs onto marzipan easter eggs to produce a contrast in colour between the design and the egg, in a similar method as decorating cakes. It is further known to use moulds to produce chocolates having designs thereon. However these are a unitary chocolate product having a uniform colour between the designs and the chocolate body.

The present invention, however, provides a chocolate product having a design of a different colour than the rest of the chocolate product.

In one preferred embodiment of the present invention, there is provided a chocolate product having a raised design of a different colour than the rest of the chocolate product.

In another form the present invention comprises a method of forming a chocolate product having a raised design of a different colour than the rest of the chocolate product, comprising the steps :

introducing into a mould, having impressions thereof of the mirror image of the raised design, sufficient chocolate or chocolate-like material, or chocolate substitute, of a first colour to fill the impressions:

removing any excess material of the first colour from the mould;

introducing into the mould chocolate or chocolate material of a second colour;

cooling the chocolate in the mould so as to set the chocolate; and

removing the thus formed chocolate product from the mould.

In another form the present invention comprises a method of forming a chocolate product which has a design of a chocolate or chocolate-like substitute which is level with, or below the level of the chocolate product, comprising the steps of:

pouring chocolate into a mould, having the mirror image of the design which stands proud of the mould surface;

allowing the chocolate to set;

removing the thus formed chocolate product from the mould;

introducing different coloured chocolate or chocolate-like material into the thus formed depressions in the chocolate product; and

allowing the product to set.

The present invention will now be described by way of example with reference to two methods of production of after dinner mints.

In the first method, the desired design and wording is carved in reverse into a suitable flat bank of suitable plastics. Preferably this is formed by computer assisted engraving, and a number of reproductions of the designs are formed on each blank. A quantity of melted white coating compound (white chocolate) is rubbed into the impressions of the designs and the excess removed from the flat surface of the blank. A quantity of melted mint flavoured dark chocolate is poured over the flat surface to cover the designs with a suitable depth of compound of pure dark chocolate. The mould is then tapped to ensure that all bubbles of air are removed. The thus covered blank is then cooled in a freezer or the like for sufficient time to set the chocolate and to ensure that the two coloured chocolates meld together, and to ensure that the chocolate product is easily removed from the mould. The block of after dinner mints is then removed from the flat mould and is then cut into the individual after dinner mints. which are then packaged.

In this operation it is important that the "white chocolate" excess is removed from the flat face of the mould such that only the raised design is formed in the "white chocolate", so as to clearly stand out from the darker chocolate background.

The process can be made using automatic means for forming the individual after dinner mints directly from the mould, and the cooling can be by way of an expanding gas spray or any other suitable cooling means.

In the second method of the present invention, a mould having a mirror image of the design which stands proud of the mould surface is utilised and the base chocolate is poured into the mould and set. The chocolate is removed from the mould and chocolate or chocolate like material of a different colour is introduced into the thus formed depressions in the surface of the base chocolate. Depending on the effect required. the depressions can be completely filled with chocolate or can be filled to a level slightly below the surface of the chocolate.

In some circumstances, the whole surface of the chocolate can be coated with the chocolate material of a different colour to ensure that the design depressions are completely filled, and the top of the chocolate surface is then cut clean to remove all excess of the secondary chocolate filling, to expose the design.

This process can be carried out by hand or by an automatic writing or injection means, to inject the secondary colouring chocolate into the design depressions are completely filled, and the top of the chocolate surface is then cut clean to remove all excess of the secondary chocolate filling, to expose the design.

This process can be carried out by hand or by an automatic writing or injection means, to inject the secondary colouring chocolate into the design depressions. The whole process could likewise be carried out automatically.

It should be obvious to people skilled in the art that modifications can be made to the above invention without departing from the spirit or scope of the present invention.

coating the first coloured chocolate; and

the chocolate product is allowed to set and the different coloured layer is cut to form a clean surface and to expose the design of the first coloured chocolate.

## Claims

1. A chocolate product having a design of a different coloured chocolate or chocolate-like material than the rest of the chocolate product.

2. A chocolate product according to Claim 1 wherein said design is raised.

3. A method of forming a chocolate product having a raised design of a different colour than the rest of the chocolate product, comprising the steps of: introducing into a mould, having impressions thereof of the mirror image of the raised design, sufficient chocolate or chocolate-like material, or chocolate substitute, of a first colour to fill the impressions;

removing any excess material of the first colour from the mould;

introducing into the mould chocolate or chocolate material of a second colour;

cooling the chocolate in the mould so as to set the chocolate to meld the two coloured chocolate materials;

and removing the thus formed chocolate product from the mould.

4. The method of Claim 3 wherein the mould has designs formed therein by computer assisted engraving.

5. A method of forming a chocolate product which has a design of a chocolate or chocolate-like substitute, which is level with, or below the level of the chocolate product, comprising the steps of:

pouring the chocolate into a mould, having the mirror image of the design which stands proud of the mould surface;

allowing the chocolate to set;

removing the thus formed chocolate product from the mould;

introducing different coloured chocolate or chocolate-like material into the thus formed depression in the chocolate product; and

allowing the product to set.

6. The method according to Claim 5 wherein the different coloured chocolate or chocolate-like material fills the said depressions and forms a layer